# EUROPEAN PATENT APPLICATION

(11) **EP 4 660 963 A1**
(43) Date of publication of application: **10.12.2025**
(21) Application number: 24180211.5
(22) Date of filing: 05.06.2024
(51) Int. Cl.: G06V 10/44, G06V 10/80, G06V 10/82, G06V 20/56

(54) **IMAGE BASED CURB DETECTION**

(71) Applicant: AUMOVIO Autonomous Mobility Germany GmbH, 85057 Ingolstadt (DE)
(72) Inventor: Aleksziev, Rita Antonia, 1092 Budapest (HU); Dr. Mati, Peter, 1092 Budapest (HU)
(74) Representative: Aumovio Corporation

(57) **Abstract**

The invention is concerned with a computer-implemented method for determining a curb (C), a computer program and a computer-readable (storage) medium. The method comprises the steps of:
- receiving an image (I(C)) from a camera showing at least one curb (C);
- determining a location of the curb (C) in the image and image pixels p(C) corresponding to the curb (C);
- determining a depth map (d(I)) at least for an image section sowing the curb (C);
- assigning depth information (d) of the depth map (d(I)) to each image pixel corresponding to the curb (p(C,d));
- transforming the image pixel (p(C,d)) corresponding to the curb (C) and assigned depth information (d) into a three dimensional reference coordinate system (p'(C,d)); and
- determining an edge (Ed) of the curb (C) based on the transformed image pixel (p(C,d)) corresponding to the curb (C) and assigned depth information (d).

## Description

The present invention is concerned with a computer-implemented method for determining a curb based on a camera image, which is advantageously used for an advanced driver assistance system. Especially, the method serves to determine and/or detect a position and/or location of a curb. The present invention is as well concerned with a computer program to carry out the method and a computer-readable (storage) medium on which the computer program is stored.

Advanced driver assistance systems (ADAS) for vehicles are based on a processing of various data sensed by various ADAS sensors, such as radar-, LiDAR- and ultrasonic sensors as well as cameras. By means of the ADAS sensors information relating to an environment of the vehicle can be obtained which in turn is used to realize various ADAS functions. ADAS functions on the one hand may include an assistance for the driver while control of the vehicle remains with the driver. On the other hand, depending on the level of automation, a full autonomously driving vehicle may be realized. Known ADAS functions for instance are various methods for detecting and/or classifying objects and/or obstacles in the vicinity of the vehicle, methods for lane detection and/or lane departure, methods for rain detection or also various parking assistance functions.

In case of parking assistance functions, there are methods known which support parking of a vehicle, e. g. support to search for a parking slot or to assist with a parking process, but also for autonomously performing the parking process. The higher the level or automation, the more reliable and detailed information about the parking slot is needed.

Knowledge of the precise position and/or location of curbs is highly important in this regard. Besides, knowing about the precise position and/or location of curbs is also important for various other ADAS functions.

An overview of curb detection options is provided in the article "Road curb and lanes detection for autonomous driving on urban scenarios" by C Fernándes et al., published in 17th International IEEE Conference on Intelligent Transportation Systems, 2014, pp. 1964-1969, doi: 10.1 109/ITSC.2014.6957993.

Curbs are frequently detected and/or determined by using LiDAR sensors, as e. g. described in "Real-Time LiDAR-Based Urban Road and Sidewalk Detection for Autonomous Vehicles" by E. Horváth et al., published in Sensors 2022, 22(1), doi: 10.3390/s22010194. For instance, based on 3D LiDAR sensor data a point cloud segmentation may be carried out to distinguish between ground level and non-ground level points. Such or similar LiDAR based methods have several disadvantages: On the one hand, difficulties or inaccuracies may arise in connection with complex and/or dynamic environments or irregular terrain. On the other hand, the resolution that can be obtained by a LiDAR sensor is lower as that of a camera. This may be of disadvantage in case of at least partial occlusions or low visibility conditions. Moreover, processing of large amount of point cloud data in real-time imposes significant computational demand; and LiDAR sensor are comparably expansive.

Another approach was described by T. Ni et al., in "Road Profile Estimation Using a 3D Sensor and Intelligent Vehicle", published in Sensors 2020, 20(13), doi: 10.3390/s20133676.

Curbs are also determined based on camera images. In this case, the determination is frequently based on a flat-world assumption and projecting all features of an image onto a ground plane using camera parameters. Curbs are then determined on the ground plane. However, the transformation of features to a ground plane is a simplification that introduces inaccuracies which increase with increasing distance to the camera.

Based thereon, the objective problem underlying the present invention consists in providing a straightforward accurate option for detecting and/or determining curbs based on camera images.

This object is achieved by the method according to claim 1, the computer program according to claim 12 and the computer-readable (storage) medium according to claim 13.

With respect to the method, the objective problem is solved by a computer-implemented method for determining a curb comprising the steps of:
- receiving an image from a camera showing at least one curb;
- determining a location of the curb in the image and image pixels corresponding to the curb;
- determining a depth map at least for an image section sowing the curb;
- assigning depth information of the depth map to each image pixel corresponding to the curb;
- transforming the image pixel corresponding to the curb and assigned depth information into a three dimensional reference coordinate system; and
- determining an edge of the curb based on the transformed image pixel corresponding to the curb and assigned depth information.

The camera-based curb estimation according to the present invention advantageously provides information of the location of the edge of the curb and therefore makes a precise and accurate detection and/or determination of the location/position of curbs in camera images possible. This is enabled by the combination of a detected curb location with depth information. Further, the method according to the present invention only necessitates camera images as input with no need for data obtained from further sensors. In particular, no LiDAR sensor is needed.

The method is applicable for various types of cameras, especially for cameras typically used in advanced driver assistance systems. Depending on the camera's lens the images may initially be distorted, e. g. in case of a fish-eye lens. Then, the method may comprise as a further step to undistort the images obtained from the camera.

The reference coordinate system can be any coordinate system, especially a world coordinate system or the camera coordinate system. In case, the camera coordinate system is used as a reference coordinate system, the transformation is carried out based on the camera parameters, such as its intrinsic and/or extrinsic parameters.

In a preferred embodiment, determining the location of the curb and image pixels corresponding to the curb comprises applying an object detection process, in particular by using an object detector. In this regard, any object detection process may be used. If an object detector is applied, the object detector may rely on a machine learning model and be any suitable known object detector.

In another preferred embodiment, determining the location of the curb and image pixels corresponding to the curb comprises applying a segmentation process, in particular a semantic segmentation process or an instance segmentation process. An instance segmentation process has the advantage that different curbs appearing in the same image may be distinguished from each other.

It is also possible to apply an object detection process and a segmentation process to determine the location of the curb and image pixels corresponding to the curb.

Advantageously, at least one neural network is used for determining the location of the curb in the image and image pixels corresponding to the curb and/or for determining the depth map at least for an image section sowing the curb. In this regard, one single multitask neural network may be used for both purposes, or different networks may be provided for the different tasks.

With respect to the neural network, it is further of advantage, if the neural network is a convolutional neural network, especially a U-net, or a transformer network. The U-Net was introduced by O. Ronneberger et al. in "U-Net: Convolutional Networks for Biomedical Image Segmentation" available on arXiv:1505.04597.

Advantageously, it was found, that the U-net, initially developed for segmentation processes, is also capable for multitask operation including object detection and determining depth information. However, the present invention is no restricted to this specific neural network type. For instance, also a YOLO network, as suggested by J. Redmon et al. in "You Only Look Once: Unified, Real-Time Object Detection", available on arXiv: 1506.02640, especially YOLOv8 or YOLOv9. Possible examples for suitable transformer networks in turn may be the Mask DINO network, which was introduced by F. Li et al. In "Mask DINO: Towards a Unified Tranformer-based Framework for Object Detection and Segmentation", avaiable on arXiv:26206.02777, or the Vision Transformer (ViT) network, which was described in "An Image is Worth 16x16 Words: Transformers for Image Recognition at Scale" by A Dosovitskiy et al., available on arXiv arXiv:2010.11929.

In one embodiment of the method, determining the edge of the curb based on the transformed image pixel corresponding to the curb and assigned depth information comprises computing surface normals for a predefined number of image pixels corresponding to one imaginary line through the curb. The imaginary line preferably is a vertical line, especially from an elevated plane corresponding to an upper portion of the curb to a ground plane corresponding to a lower portion of the curb.

In this regard, it is of advantage, if determining the edge of the curb based on the transformed image pixel corresponding to the curb and assigned depth information comprises calculating scalar products between different pairs of the surface normals. For this purpose, for instance, a reference normal may be chosen corresponding to the upper portion of the curb.

However, determining the edge of the curb based on the transformed image pixel corresponding to the curb and assigned depth information may also be perfume d in different ways, e. g. by plane fitting onto a top and side plane associated with the curb. In this case, the edge corresponds to an intersection of the two planes.

In another embodiment assigning depth information of the depth map to each image pixel corresponding to the curb comprises creating a mask of the curb based on the determined image pixels corresponding to the curb and applying the mask to the determined depth information. By means of the mask, the depth information may be correlated with the determined location of the curb.

It is of advantage, if a height of the curb is determined. Knowing the height of a curb is of advantage, if the curb information is further used, e. g. in an advanced driver assistance system, in particular for performing a parking function.

In this regard in turn, it is preferred, if the height is determined based on the determed edge of the curb.

The method according to the present invention is preferably used in an advanced driver assistance system, especially for implementing a parking function.

The problem underlying the present invention is also solved by means of a computer program comprising instructions, which, when the program is executed by a computer, cause the computer to carry out the method according to any embodiment described and by means of a computer-readable (storage) medium comprising instructions executable by at least one processor to perform the method according to any embodiment described or on which the computer program according to the present invention is stored.

The present invention and its preferred embodiments will be described in more detail based on the following figures, wherein:
Fig. 1 shows a flow chart illustrating the method according to the present invention;
Fig. 2 illustrates a preferred embodiment to (a) determine a location of a curb and corresponding image pixels and (b) to create a mask of the curb based on the determined image pixels; and
Figs. 3-5 illustrate a preferred embodiment to determine the edge and height of a curb.
Fig. 4 and 5 are related to a preferred specific embodiment relating to the height determination of the curb.

In the figures, the same elements are always provided with the same reference symbols.

By means of the method of the present invention the location and position, especially also in three dimensions, of a curb can be determined in a straightforward manner and solely relying on a camera as sensing unit. This lowers the hardware demand for related advanced driver systems or other significantly.

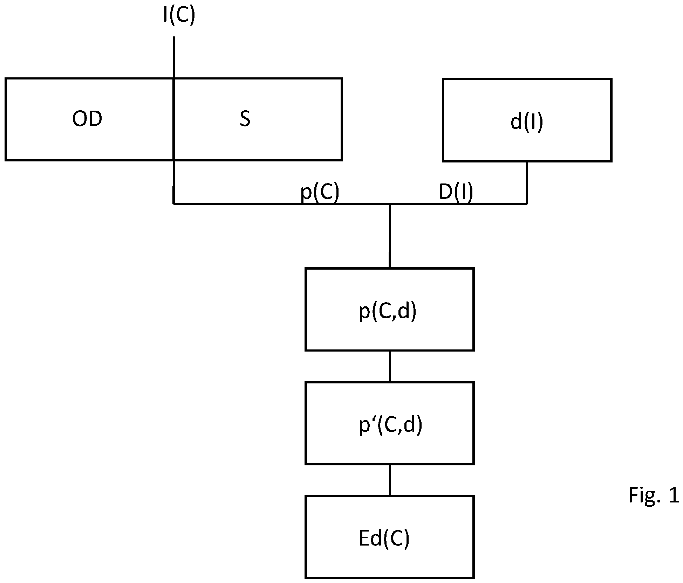

A flow chart of a preferred embodiment of the method is illustrated in Fig. 1. Based on a received camera image I(C) showing at least one curb C, a first step comprises to determine a location of the curb C in the image I and image pixels p(C) corresponding to the curb C. In the exemplary embodiment shown, this step is carried out by using an object detection process OD to determine a bounding box corresponding to the curb and by a segmentation process S to determine the corresponding image pixels. Other embodiments may use only an object detection process OD or a segmentation process S.

In a second step a depth map d(I) is determined at least for an image section showing the curb C, here it is determined for the entire image I. Subsequently, the determined depth information d(I) is assigned to each image pixels p(C,d) corresponding to the curb C.

Finally, the curb image pixel with assigned depth information p(C,d) are transformed into a three dimensional reference coordinate system p'(C,d); and an edge of the curb Ed(C) is determined based on the transformed image pixel p'(C,d). The edge Ed(C) of the curb B is the most relevant part of the curb C which is defined by a top plane parallel to an upper portion of the curb and a side plane perpendicular to the top plain.

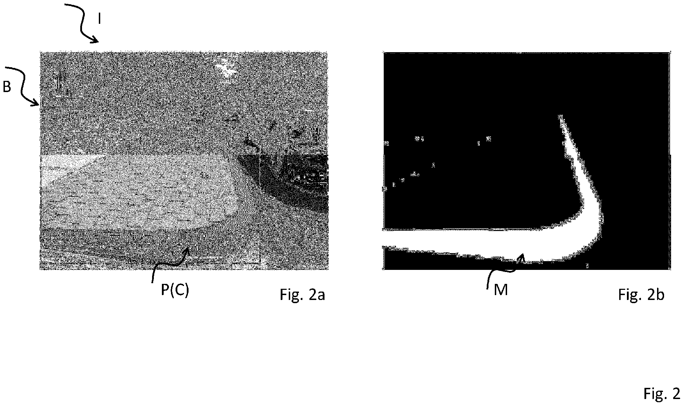

The steps of determining a location of the curb C in the image I, image pixels p corresponding to the curb C and a depth map d(I) at least for an image section sowing the curb C may be performed by any suitable method capable of the respective task. However, a preferred embodiment comprises that at least one neural network NN is used for one or both tasks. If a multitask neural network, e. g. a convolutional neural network (CNN) is used, this network may be simultaneously trained for an object detection, semantic segmentation and depth estimation process. Such network may then determine curbs C in camera images I by first assigning bounding boxes to the curbs C and subsequently by extracting image pixels p within the bounding box B that correspond to the curb C by the semantic segmentation process. An image, in which a bounding box B and image pixels p that correspond to a curb C are indicated, is shown in Fig. 2a.

There are also multiple options available to assign the depth information of the depth map d(I) to each image pixel corresponding to the curb p(C,I). One example, as illustrated in Fig. 2b, comprises to generate a mask m of the determined curb B based on the determined image pixels p(C), which may be applied to the depth map d(I) for assigning depth information d to the determined image pixels p(C).

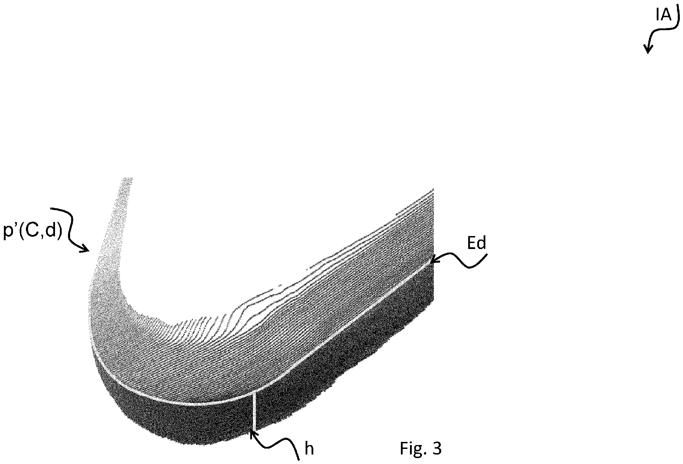

The determination of the curb's edge Ed is illustrated in Fig. 3. Fig. 3 shows the transformed curb image pixel with assigned depth information p'(C,d) and the edge Ed determined therefrom. In addition a height h of the curb C is also indicated which may also be determined by means of the method according to the present invention.

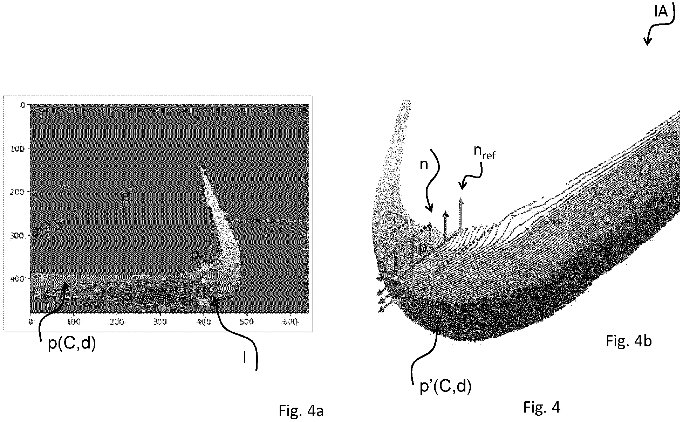

To determine the edge Ed of the curb C, surface normals n may be calculated for a predefined number of image pixels p corresponding to one imaginary line I through the curb C. The image pixels p may be chosen based on a given frequency or interval. An example es provided in Fig. 4a, which shows the determined image pixels p(C,d) corresponding to the curb C as well as the imaginary line I with exemplary pixels p chosen for calculating surface normals n. Fig. 4b in turn shows the same curb C based on the transformed determined image pixels p'(C,d) with the calculated surface normals n indicated in the image.

The imaginary line I preferably is a vertical line through the curb C as it is the case for Fig. 4. A vertical line I ensures that pixels p corresponding to all portions of the curb C are chosen, in particular pixels corresponding to an upper portion of the curb C, to a lower portion of the curb C as well as pixels or points p corresponding to a side portion of the curb C.

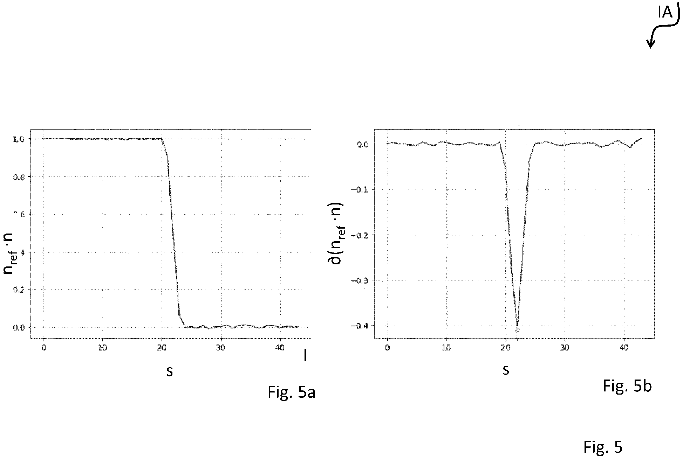

Accordingly, a rotation of the calculated surface normals n occurs at the curb's edge Ed. By computing scalar products between pairs of calculated surface normals n, the precise position of the edge Ed may then be determined. To calculate the scalar products a reference surface normal n_{ref} may be chosen, preferably one that corresponds to the upper portion of the curb C. The scalar product of each calculated surface normal n with the reference surface normal n_{ref} as a function of the imaginary line I is shown in the graph provided in Fig. 5a, while its derivative is shown in Fig. 5b. The position of the edge Ed may e. g. be determined by finding a minimum of the derivative of the scalar product of the surface normals n.

The curb's height may then be determined based on the determined edge Ed and the depth map d(I) or the determined image pixels p(C,d) with assigned depth information.

Furthermore, the precise location of the curb's edge Ed may be determined for multiple imaginary lines I along the curb C. Thereby, also average curb heights may be estimated. In case the curb C is partially occluded in the image I, these portions may be interpolated by using the average values.

## Claims

1. Computer-implemented method for determining a curb (C), the method comprising the steps of:
- receiving an image (I(C)) from a camera showing at least one curb (C);
- determining a location of the curb (C) in the image and image pixels p(C) corresponding to the curb (C);
- determining a depth map (d(I)) at least for an image section sowing the curb (C);
- assigning depth information (d) of the depth map (d(I)) to each image pixel corresponding to the curb (p(C,d));
- transforming the image pixel (p(C,d)) corresponding to the curb (C) and assigned depth information (d) into a three dimensional reference coordinate system (p'(C,d)); and
- determining an edge (Ed) of the curb (C) based on the transformed image pixel (p(C,d)) corresponding to the curb (C) and assigned depth information (d).

2. Method according to claim 1,
wherein determining the location of the curb (C) and image pixels corresponding to the curb (C) comprises applying an object detection process (OD), in particular by using an object detector.

3. Method according to claim 1 or 2,
wherein determining the location of the curb (C) and image pixels corresponding to the curb (C) comprises applying a segmentation process (S), in particular a semantic segmentation process or an instance segmentation process.

4. Method according to any of the preceding claims,
wherein at least one neural network (NN) is used for determining the location of the curb (C) in the image (I) and image pixels (p(C)) corresponding to the curb (C) and/or for determining the depth map (d(I)) at least for an image section sowing the curb (C).

5. Method according to claim 4,
wherein the neural network (NN) is a convolutional neural network, especially a U-net, or a transformer network.

6. Method according to any of the preceding claims,
wherein determining the edge (Ed) of the curb (C) based on the transformed image pixel (p'(C,d)) corresponding to the curb (C) and assigned depth information (d) comprises computing surface normal (n) for a predefined number of image pixels (p) corresponding to one imaginary line (I) through the curb (C).

7. Method according to claim 6,
wherein determining the edge (Ed) of the curb (C) based on the transformed image pixel (p'(C,d)) corresponding to the curb (C) and assigned depth information (d) comprises calculating scalar products between different pairs of the surface normals (n).

8. Method according to any of the preceding claims,
wherein assigning depth information (d) of the depth map (d(I)) to each image pixel (p(C)) corresponding to the curb (C) comprises creating a mask (M) of the curb (C) based on the determined image pixels (p(C)) corresponding to the curb (C) and applying the mask (M) to the determined depth information (d).

9. Method according to any of the preceding claims,
wherein a height (h) of the curb (C) is determined.

10. Method according to claim 9,
wherein the height (h) is determined based on the determined edge (Ed) of the curb (C).

11. Use of the method according to any of the preceding claims for in an advanced driver assistance system, especially for implementing a parking function.

12. Computer program comprising instructions, which, when the program is executed by a computer, cause the computer to carry out the method of any of the claims 1-10.

13. Computer-readable (storage) medium comprising instructions executable by at least one processor to perform the method of any of the claims 1-10 or on which the computer program according to claim 12 is stored.
